# EUROPEAN PATENT APPLICATION

(11) **EP 4 757 006 A1**
(43) Date of publication of application: **10.06.2026**
(21) Application number: 24874973.1
(22) Date of filing: 04.10.2024
(51) Int. Cl.: H01M 10/658, H01M 50/358, H01M 10/647, H01M 50/211

(54) **BATTERY MODULE**

(30) Priority: 05.10.2023 KR 20230132715; 02.10.2024 KR 20240134095
(71) Applicant: LG Energy Solution, Ltd., Seoul 07335 (KR)
(72) Inventor: LEE, Geumpyo, Daejeon 34122 (KR); PARK, Dongho, Daejeon 34122 (KR)
(74) Representative: BCKIP Part mbB
(86) International application number: PCT/KR2024/015068
(87) International publication number: WO 2025/075417

(57) **Abstract**

A battery module is disclosed. The battery module comprises: a module housing having an accommodation space formed therein and an open upper side; a top plate installed to cover the upper side of the module housing; a plurality of battery cells stacked in the accommodation space of the module housing; and at least one thermal barrier which is interposed between one or more battery cells, is connected to the top plate, and is deformed while being connected to the top plate when opening the top plate so as to block the flame from propagating to neighboring battery cells.

## Description

### [TECHNICAL FIELD]

This application claims the benefit of priority based on Korean Patent Application No. 10-2023-0132715 filed on October 5, 2023 and Korean Patent Application No. 10-2024-0134095 filed on October 2, 2024, entire content disclosed in the document of the patent applications is included as a part of this specification.

The present invention relates to a battery module capable of suppressing flame from transmitting within the battery module even when the top plate is deformed during thermal runaway.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic battery cells and pouch-type battery cells that can be applied to products such as mobile phones due to their thin thickness. In terms of materials of battery cells, demand is increasing for lithium battery cells 130 such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these battery cells is approximately 2.5V to 4.2V. When a higher output voltage is required, a battery module is constituted by connecting multiple battery cells in series. In addition, a battery package is constituted by connecting multiple battery modules in series. In addition, a battery package is constituted by connecting multiple battery cells 130 in parallel according to the charge and discharge capacity required for the battery package. Accordingly, the number of battery cells and the electrical connection structure of the battery package may be selected in various ways according to the required output voltage or charge and discharge capacity.

The battery module may not effectively dissipate heat generated during the charge and discharge process. In such case, the battery module may be degraded as heat accumulates in the battery module. When the degradation of the battery module is accelerated, thermal runaway or explosion of the battery module may occur. The battery module includes an insulation panel between a plurality of battery cells to delay heat transfer and thermal runaway of neighboring battery cells. The insulation panel is manufactured in a square plate shape so as to be in contact with the side surface of the battery cell 130.

When a flame occurs, the top plate of the battery module may be deformed or opened by strong pressure. Here, since a space is formed between the deformed top plate and the battery cell block, the flame and heat may not only be discharged to the outside of the battery module through the venting hole but may also move within the battery module through the space under the top plate. In addition, when the flame and heat move within the battery module, it may be difficult to delay ignition of neighboring battery cells.

The background art of the present invention is disclosed in Korean Patent Application Publication No. 2021-0098331 (published on August 10, 2021).

### [DISCLOSURE]

### [TECHNICAL PROBLEM]

In order to solve above-described problems, it is an object of the present invention to provide a battery module wherein the top plate may be deformed with the thermal barrier attached thereto.

It is an object of the present invention to provide a battery module capable of blocking flame and heat from moving to the neighboring battery cell inside the battery module.

It is an object of the present invention to provide a battery module capable of delaying the thermal runaway time when flame is generated in the battery module.

It is an object of the present invention to provide a battery module capable of preventing the bent portion of the thermal barrier from blocking the venting hole.

It is an object of the present invention to provide a battery module capable of preventing the bent portion from sagging downward to cause friction against the pouch of the battery cell.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

A battery module includes: a module housing provided with an accommodating space therein and an upper portion of the module housing provided with an opening; a top plate provided to cover the upper portion of the module housing; a plurality of battery cells stacked in the accommodating space of the module housing; and one or more thermal barriers interposed between at least one battery cells.

In order to solve the above-described problem, according to the present invention, the one or more thermal barriers are connected to the top plate such that the one or more thermal barriers are deformed while remaining connected to the top plate when the top plate is opened, thereby blocking the flame from moving toward the neighboring battery cell.

Each of the one or more thermal barriers may include: a thermal insulation pad interposed between the plurality of battery cells and spaced apart from the top plate; and a thermal insulation sheet stacked on the thermal insulation pad, extending above the thermal insulation pad so as to be attached to the top plate, and deformed while remaining to be attached to the top plate when the top plate may be opened.

The thermal insulation sheet may be formed to be a bent shape in a section between the thermal insulation pad and the top plate.

The thermal insulation sheet may include: a flat sheet attached to at least one of two surfaces of the thermal insulation pad; and a bent portion formed to be a bent shape in a section between an upper portion of the thermal insulation pad and the top plate, and connected to the top plate.

The bent portion may have an N shape.

The bent portion may have a zigzag shape in vertical direction.

The bent portion may have a rounded N shape.

The bent portion may be disposed vertically above the thermal insulation pad.

The width of the bent portion may be within a predetermined range with respect to a thickness of the one or more thermal barriers.

The top plate may be provided with a plurality of venting holes, and the bent portion may be connected to a portion of the top plate without the venting holes.

The top plate may be provided with a plurality of venting holes, and the venting holes may be provided in the top plate between adjacent thermal barriers.

The plurality of battery cells may be stacked in a widthwise direction of the module housing, and the thermal insulation sheet may block in the widthwise direction of the module housing to prevent flames from traveling in the widthwise direction of the module housing.

The connecting structure of the one or more thermal barriers and the top plate may include an attachment. Preferably, the attachment may be established by double-sided tape.

The connecting structure of the one or more thermal barriers and the top plate may include a connector. Preferably, the connector may include fastening parts such as screws, rivets and bolts.

The connecting structure of the one or more thermal barriers and the top plate may include a connecting guide connected to two or more thermal barriers and connected to the top plate. Preferably the connecting guide may include a rigid member.

The one or more thermal barriers may be connected to the bottom surface of the top plate. Preferably, the connecting portion of the one or more thermal barriers may face the bottom surface of the top plate.

The one or more thermal barriers may be connected to the upper surface of the top plate. Preferably, the one or more thermal barriers passes through the top plate, and the connecting portion of the one or more thermal barriers may face the upper surface of the top plate. The one or more thermal barriers may pass through the top plate and face the upper surface of the top plate.

### [ADVANTAGEOUS EFFECTS]

According to the present invention, even when the top plate is bent or deformed upward by strong pressure, the thermal barrier may be deformed while being attached to the top plate without being separated from the top plate.

According to the present invention, since the thermal barrier is attached to the deformed top plate and still blocks the space under the top plate, flame and heat inside the battery module may be blocked from moving to the neighboring battery cell. Accordingly, the thermal runaway may be delayed when flame occurs in the battery module.

According to the present invention, since the thermal insulation sheet is formed with a surplus length greater than the deformation amount of the top plate, the thermal insulation sheet may be prevented from falling off or separating from the top plate even when the top plate is deformed by the flame and gas pressure.

According to the present invention, since the bent portion is attached to a portion of the top plate without the venting holes, the bent portion may be prevented from blocking the venting holes.

According to the present invention, since the bent portion is arranged vertically above the thermal insulation pad, the bent portion may be prevented from causing friction against the pouch of the battery cell even when the bent portion sags downward and causes friction against the upper end portion of the thermal insulation pad.

According to the present invention, the thermal barrier may be firmly fixed to the top plate through a simple connecting structure, thereby facilitating manufacturing.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery module according to the present invention.
FIG. 2 is a cross-sectional view schematically illustrating the battery module cut open in the widthwise direction according to the present invention.
FIG. 3 is a perspective view schematically illustrating a thermal barrier of the battery module according to the present invention.
FIG. 4 is an enlarged view schematically illustrating the bent portion of the thermal barrier attached to the top plate while avoiding the venting hole according to the present invention.
FIG. 5 is a cross-sectional view schematically illustrating the bent portion of the thermal barrier deformed while remaining bonded to the top plate when the top plate is deformed according to the present invention.
FIG. 6 is a cross-sectional view schematically illustrating another example of the bent portion of the thermal barrier according to the present invention.
FIG. 7 is a cross-sectional view schematically illustrating yet another example of the bent portion of the thermal barrier according to the present invention.
FIG. 8 is a perspective view illustrating a process of connecting the bent portion of the thermal barrier to the top plate through a connecting guide according to the present invention.
FIG. 9 is a perspective view illustrating the connecting guide of FIG. 8 disposed between the bent portions of the thermal barrier.
FIG. 10 is a lateral cross-sectional view of the connecting guide of FIG. 9.
FIG. 11 illustrates the upper end portion of the bent portion in FIG. 10 bent and fixed to the connecting guide.
FIG. 12 is a perspective view illustrating a process of assembling the top plate in the state shown in FIG. 11.
FIG. 13 is a lateral cross-sectional view illustrating the bent portion fixed to the top plate by the barrier connecting portion with the module housing covered with the top plate of FIG. 12.
FIG. 14 is a lateral cross-sectional view illustrating the plate connecting portion and the top plate connected and fixed by a connector with the module housing covered with the top plate of FIG. 12.
FIG. 15 is a perspective view illustrating a process of connecting the bent portion of the thermal barrier to the top plate by another method according to the present invention.
FIG. 16 is a perspective view illustrating the bent portion of the thermal barrier penetrating the slit of the top plate and protruding above the top plate with the module housing covered with the top plate of FIG. 15.
FIG. 17 is a perspective view illustrating the bent portion protruding above the top plate in FIG. 16 laterally bent and fixed to the upper surface of the top plate.
FIG. 18 is a lateral cross-sectional view of the bent portion of FIG. 17.

### [DESCRIPTION OF REFERENCE NUMERALS]

100: battery module
110: module housing
112: terminal
120: top plate
121: slit
122: venting holes
123: portion without venting holes
130: battery cell
140: thermal barrier
141: thermal insulation pad
143: thermal insulation sheet
144: flat sheet
145, 146, 147: bent portion
160: connecting guide
161: barrier connecting portion
162: plate connecting portion
170: connector
W1, W2, W3: widths of bent portions

### [DETAILED DESCRIPTION OF THE PREFERRED EMBODIMENTS]

Hereinafter, preferred embodiments of the present invention will be described with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery module according to an embodiment of the present invention will be described.

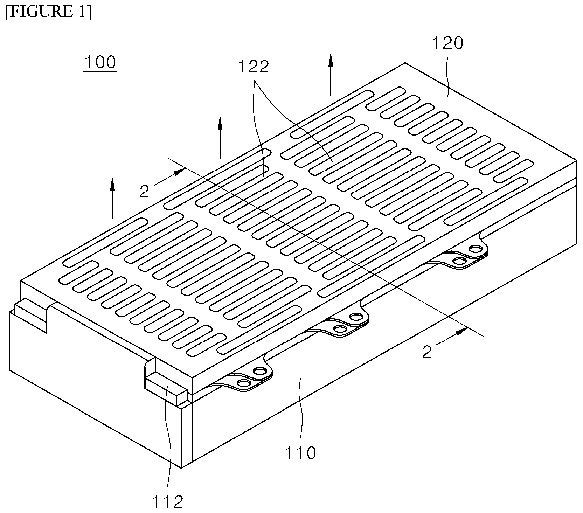

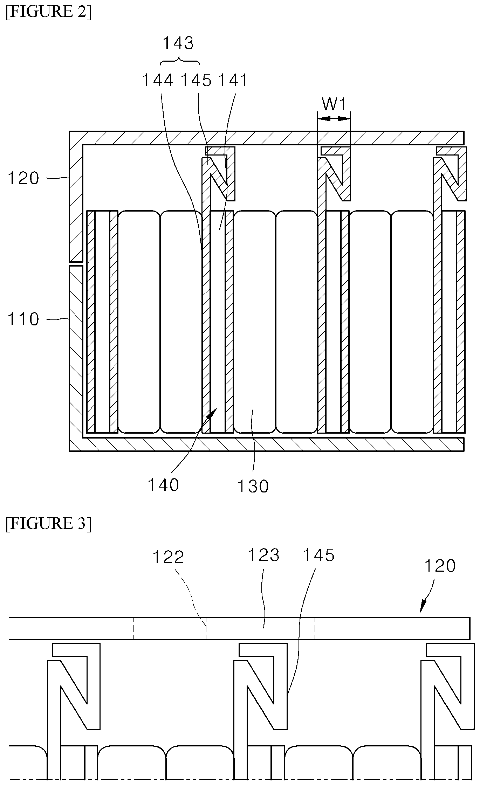

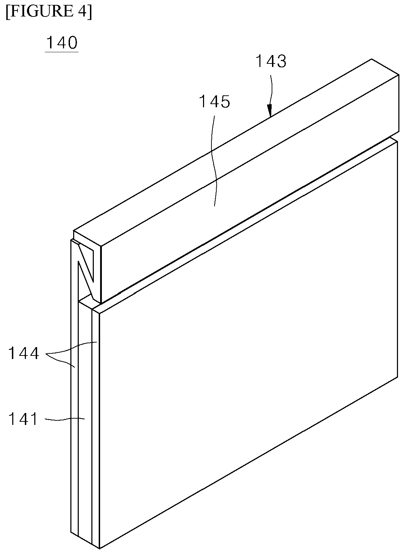

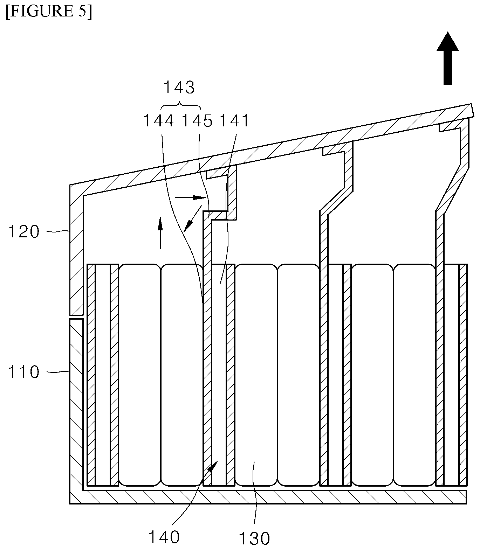

FIG. 1 is a perspective view schematically illustrating a battery module according to the present invention, FIG. 2 is a cross-sectional view schematically illustrating the battery module cut open in the widthwise direction according to the present invention, FIG. 3 is a perspective view schematically illustrating a thermal barrier of the battery module according to the present invention, FIG. 4 is an enlarged view schematically illustrating the bent portion of the thermal barrier attached to the top plate while avoiding the venting hole according to the present invention, and FIG. 5 is a cross-sectional view schematically illustrating the bent portion of the thermal barrier deformed while remaining bonded to the top plate when the top plate is deformed according to the present invention.

Referring to FIGS. 1 to 5, a battery module 100 according to an embodiment of the present invention includes: a module housing 110; a top plate 120; a plurality of battery cells 130; and one or more thermal barriers 140.

The module housing 110 is provided with an accommodating space therein and an open upper portion. The module housing 110 is formed of a thermally conductive material such as aluminum so as to dissipate heat generated from a plurality of battery cells 130. The module housing 110 may include a U frame with open front, rear and upper portions, and end plates coupled to the front and rear portions of the U frame.

The top plate 120 is installed to cover the upper portion of the module housing 110. The top plate 120 is formed of a thermally conductive material such as aluminum. A plurality of venting holes 122 are formed in the top plate 120. Flames or gases generated inside the module housing 110 may be discharged to the outside through the venting holes 122. The venting holes 122 are arranged at a position facing the battery cells 130 (vertically above). The venting holes 122 may have a long hole shape parallel to the lengthwise direction of the battery cells 130. Accordingly, when flame or heat is generated in the battery cell 130, the flame or heat may rise and be discharged through the venting holes 122.

The plurality of battery cells 130 are stacked in the accommodating space of the module housing 110. For example, the plurality of battery cells 130 may be parallel to a longitudinal direction of the module housing 110 and stacked in the widthwise direction of the module housing 110.

The plurality of battery cells 130 are stacked along one direction. The battery cell 130 is a pouch-type battery cell in which an electrode laminate (not shown) is accommodated inside the pouch.

The pouch includes a metal film layer, an outer resin layer stacked on the outer surface of the metal film layer, and an insulating layer stacked on the inner surface of the metal film layer. The metal film layer may include aluminum foil or a copper film, etc. The outer resin layer may be made of nylon or polyethylene terephthalate, which have excellent mechanical strength to protect from the outside. The insulating layer has thermal bonding properties and acts as an adhesive, and may be made of polypropylene, polyolefin, C-PP (Casted Polypropylene), methacrylate, etc.

The battery cell 130 is formed by sequentially stacking a cathode, a separator and an anode. In addition, an electrolyte is accommodated inside the battery cell 130. Electrode leads protrude from both sides of the battery cell 130, and a plurality of electrode leads 113 are connected to a bus bar (not shown). Apparently, electrode leads of different polarities may be connected to protrude from one lengthwise end of the battery cell 130.

The thermal barrier 140 may be interposed between one or more battery cells 130. The thermal barrier 140 is attached to the top plate 120, and when the top plate 120 is deformed, the thermal barrier 140 is deformed while attached to the top plate 120 to block the flame from moving toward the neighboring battery cell 130. At least one thermal barrier 140 may be installed inside the module housing 110.

When flame is generated in some of the battery cells 130, some of the heat and flame may be discharged to the outside of the battery module 100 through the venting holes 122. In addition, the gas pressure inside the battery module 100 may push upward and deform the top plate 120. When the top plate 120 is bent or deformed upward by strong pressure, the thermal barrier 140 is deformed while attached to the top plate 120 as the top plate 120 is opened. Here, since the thermal barrier 140 is still attached to the deformed top plate 120 and blocks the space under the top plate 120, the flame and heat may be blocked from moving to the neighboring battery cell 130. Accordingly, the thermal runaway time may be delayed when the flame is generated from the battery module 100.

The thermal barrier 140 may include a thermal insulation pad 141 and a thermal insulation sheet 143.

The thermal insulation pad 141 is interposed between the plurality of battery cells 130 and spaced apart from the top plate 120. The thermal insulation pad 141 may have a height and length that are almost same as the battery cell 130. This thermal insulation pad 141 plays a role in blocking heat transfer from the neighboring battery cell 130.

The thermal insulation sheet 143 surrounds the outer surface of the thermal insulation pad 141 and extends above the thermal insulation pad 141 so as to be attached to the top plate 120. The thermal insulation sheet 143 is deformed while remaining to be attached to the top plate 120 when the top plate 120 is opened. For example, the thermal insulation sheet 143 may have a surplus length greater than the deformation amount of the top plate 120. Accordingly, even when the top plate 120 is deformed by the flame and gas pressure, the thermal insulation sheet 143 may be prevented from being detached or separated from the top plate 120. That is, even when the top plate 120 is deformed to be away from the thermal barrier 140, the thermal insulation sheet 143 may remain in the state of blocking the space under the top plate 120. Therefore, flame and heat generated from a specific battery cell 130 may be prevented from being transmitted to the neighboring battery cell 130.

The plurality of battery cells 130 are stacked in the widthwise direction of the module housing 110. The thermal insulation sheet 143 shields in the widthwise direction of the module housing 110 to prevent flame from being transmitted in the widthwise direction of the module housing 110.

The thermal insulation pad 141 may be formed of a flexible material so as to be deformed by the tensile force of the top plate 120. The thermal insulation pad 141 may include at least one of silicone, polyurethane and aerogel.

Polyurethane foam is a porous polymer compound formed by a gelling reaction and a blowing reaction with carbon dioxide gas. Since polyurethane foam is formed with carbon dioxide and a porous structure, the load of the thermal insulation pad 141 may be significantly reduced while improving the insulation efficiency. In addition, the physical properties of polyurethane foam are hardly changed by the heat generated from the battery cell 130.

Aerogel is a porous nanostructure obtained by replacing the liquid in the gel structure with air while maintaining the gel structure. Aerogel is composed of nanoparticles with a size of 1-50nm. In addition, since aerogel is composed of approximately 99.8% air and silicon dioxide (SiO₂) of 1/10,000nm, aerogel is significantly light and has significantly excellent insulation properties. Such aerogel thermal insulation pad 141 may significantly reduce the load while improving the insulation efficiency. In addition, since the aerogel is composed of air and silicon dioxide, changes in physical properties or deformation due to heat generated from the battery cell 130 may be minimized.

The thermal insulation sheet 143 may be manufactured as a flame resistance barrier sheet. The flame resistance barrier sheet is flexible and flame retardant. Accordingly, the thermal insulation sheet 143 is hardly damaged by flame and may be deformed according to the deformation amount of the top plate 120.

The thermal insulation sheet 143 may be formed to be a bent shape in a section between the thermal insulation pad 141 and the top plate 120. Accordingly, when the top plate 120 is deformed and a tensile force is applied to the thermal insulation sheet 143, the bent portion is unfolded. As a result, the thermal insulation sheet 143 may remain attached to the top plate 120.

The thermal insulation sheet 143 may include a flat sheet 144 and a bent portion 145.

The flat sheet 144 is attached to two side surfaces of the thermal insulation pad 141. The flat sheet 144 may be formed as one sheet so as to be attached to two sides of the thermal insulation pad 141 simultaneously. In addition, the thermal insulation sheet 143 may be formed as two sheets so as to be attached to two sides of the thermal insulation pad 141, respectively.

The bent portion 145 having a bent shape in a section between an upper portion of the thermal insulation pad 141 and the top plate 120 is attached to the top plate 120. That is, the bent portion 145 is a portion that does not face the thermal insulation pad 141. The bent portion 145 has a larger surplus length than the deformation amount of the top plate 120.

The plurality of venting holes 122 are provided in the top plate 120, and the bent portion 145 may be attached to a portion of the top plate 120 without the venting holes 122. Accordingly, the bent portion 145 may be prevented from blocking the venting holes 122.

The plurality of venting holes 122 are provided in the top plate 120, and the venting holes 122 are formed between adjacent thermal barriers 140 in the top plate 120. Accordingly, the venting holes 122 may be arranged vertically above the battery cell 130. As a result, when the battery cell 130 is ignited, the flame and heat may be smoothly and quickly discharged out of the top plate 120.

The bent portion 145 may have an N shape. Here, the bent portion 145 is bent at least 2 to 3 times to form an acute angle, and has a form in which the portion attached to the top plate 120 is arranged vertically above the thermal insulation pad 141. This is because venting holes 122 are provided vertically above the battery cell 130 whereas venting holes 122 are not provided vertically above the thermal barrier 140. Accordingly, the attached portion of the bent portion 145 may be prevented from blocking the venting holes 122. In addition, the number of bends of the bent portion 145 is sufficient as long as the bent portion 145 is maintained loose when the top plate 120 is deformed.

The width W1 of the bent portion 145 may deviate within a certain range with respect to the thickness of the thermal barrier 140. That is, the width W1 of the bent portion 145 may be in the same range as or almost the same as the thickness of the thermal barrier 140. This is to prevent the bent portion 145 from being sagged downward due to external shock or vibration causing friction against the pouch of the battery cell 130. By preventing the bent portion 145 from causing friction against the pouch, damage to the pouch may be prevented.

The bent portion 145 may be disposed vertically above the thermal insulation pad 141. Accordingly, even when the bent portion 145 is sagged downward and causes friction against the upper end portion of the thermal insulation pad 141, the friction against the pouch of the battery cell 130 may be prevented. Therefore, damage to the battery cell may be prevented.

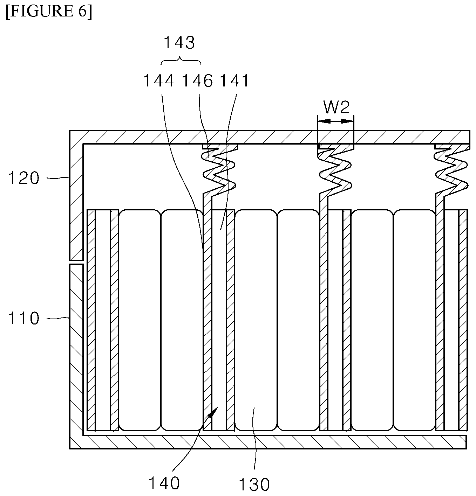

FIG. 6 is a cross-sectional view schematically illustrating another example of the bent portion of the thermal barrier according to the present invention.

Referring to FIG. 6, the thermal insulation sheet 143 may include a flat sheet 144 and a bent portion 146.

Since the flat sheet 144 is substantially the same as described above, the same reference numeral is given and the description thereof is omitted.

The bent portion 146 has a zigzag shape in the vertical direction. For example, the bent portion 146 may have a shape that is alternately bent to the right and left. The bent portion 146 is also bent two to three times at an acute angle, and the portion attached to the top plate 120 is arranged vertically above. This is because venting holes 122 are provided vertically above the battery cell 130 whereas venting holes 122 are not provided vertically above the thermal barrier 140. Accordingly, the attached portion of the bent portion 146 may be prevented from blocking the venting holes 122. In addition, the number of bends of the bent portion 146 is sufficient as long as the bent portion 146 is maintained loose when the top plate 120 is deformed.

The width W2 of the bent portion 146 may be within a certain range (micro range) with respect to the thickness of the thermal barrier 140. That is, the width W2 of the bent portion 146 may be in the range equal to or almost equal to the thickness of the thermal barrier 140. This is to prevent the bent portion 146 from being sagged downward due to external shock or vibration causing friction against the pouch of the battery cell 130. By preventing the bent portion 146 from causing friction against the pouch, damage to the pouch may be prevented.

The bent portion 146 may be disposed vertically above the thermal insulation pad 141. Accordingly, even when the bent portion 146 is sagged downward and causes friction against the upper end portion of the thermal insulation pad 141, the friction against the pouch of the battery cell 130 may be prevented.

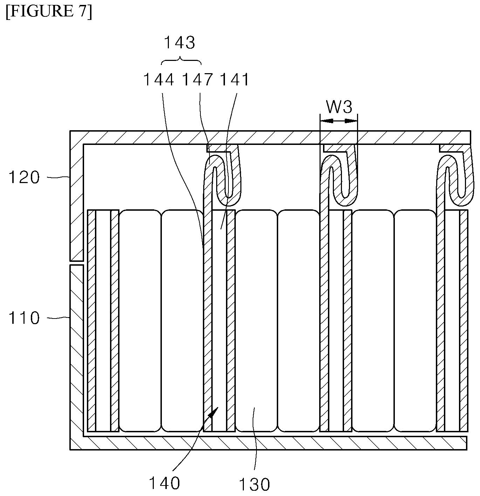

FIG. 7 is a cross-sectional view schematically illustrating yet another example of the bent portion of the thermal barrier according to the present invention.

Referring to FIG. 7, the thermal insulation sheet 143 may include a flat sheet 144 and a bent portion 147.

Since the flat sheet 144 is substantially the same as described above, the same reference numeral is given and the description thereof is omitted.

The bent portion 147 has a rounded N shape in the vertical direction. For example, the bent portion 147 may have a curved shape that is alternately rounded upward and downward. The bent portion 147 is also disposed vertically above the portion attached to the top plate 120. This is because venting holes 122 are provided vertically above the battery cell 130 whereas venting holes 122 are not provided vertically above the thermal barrier 140. Accordingly, the attached portion of the bent portion 147 may be prevented from blocking the venting holes 122. In addition, the number of bends of the bent portion 147 is sufficient as long as the bent portion 147 is maintained loose when the top plate 120 is deformed.

The width W3 of the bent portion 147 may deviate within a certain range with respect to the thickness of the thermal barrier 140. That is, the width W3 of the bent portion 147 may be in the range equal to or almost equal to the thickness of the thermal barrier 140. This is to prevent the bent portion 147 from being sagged downward due to external shock or vibration causing friction against the pouch of the battery cell 130. By preventing the bent portion 147 from causing friction against the pouch, damage to the pouch may be prevented.

The bent portion 147 may be disposed vertically above the thermal insulation pad 141. Accordingly, even when the bent portion 147 is sagged downward and causes friction against the upper end portion of the thermal insulation pad 141, the friction against the pouch of the battery cell 130 may be prevented.

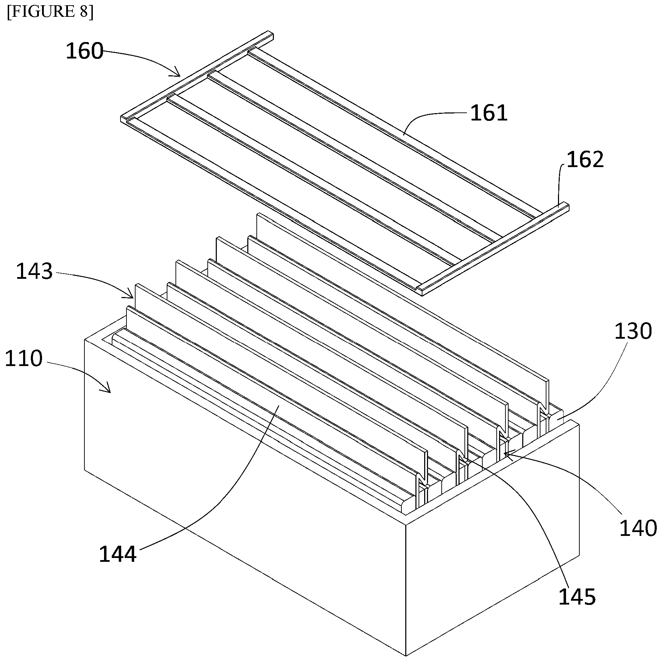

Hereinafter, with reference to FIGS. 8 to 14, a first embodiment of a method of connecting the thermal barrier to the top plate of the battery module and a connecting structure according to the present invention will be described.

Referring to FIG. 8, with the laminate of the battery cells 130 and the thermal barriers 140 accommodated in the module housing 110, the end portion of the bent portion 145 of the thermal insulation sheet 143 of the thermal barrier 140 has an orientation extending upward. In order to facilitate the process of connecting the thermal insulation sheet 143 to the top plate in such state, a connecting guide 160 that temporarily fixes the end portions of the plurality of thermal insulation sheets 143 is installed.

The connecting guide 160 is provided with: a plurality of barrier connecting portions 161 connected to the end portions of the plurality of thermal insulation sheets 143, respectively; and a plate connecting portion 162 integrally connecting the plurality of barrier connecting portions 161. The plurality of barrier connecting portions 161 are spaced apart along the direction parallel to the stacking direction of the battery cells 130, and the plate connecting portion 162 extends parallel to the stacking direction of the battery cells 130 and connects two ends of the plurality of the barrier connecting portions 161.

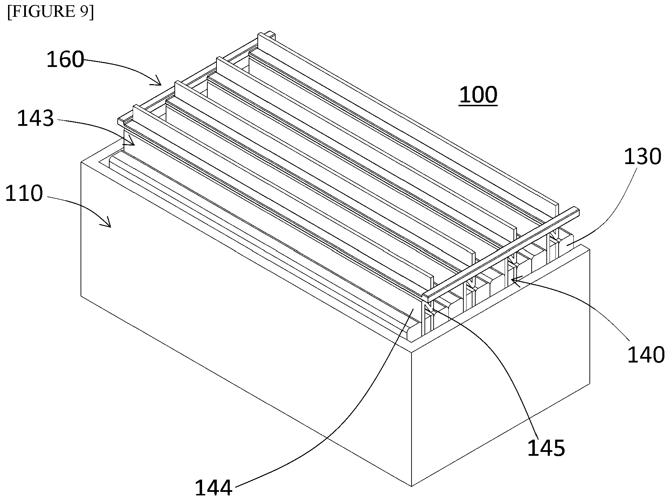

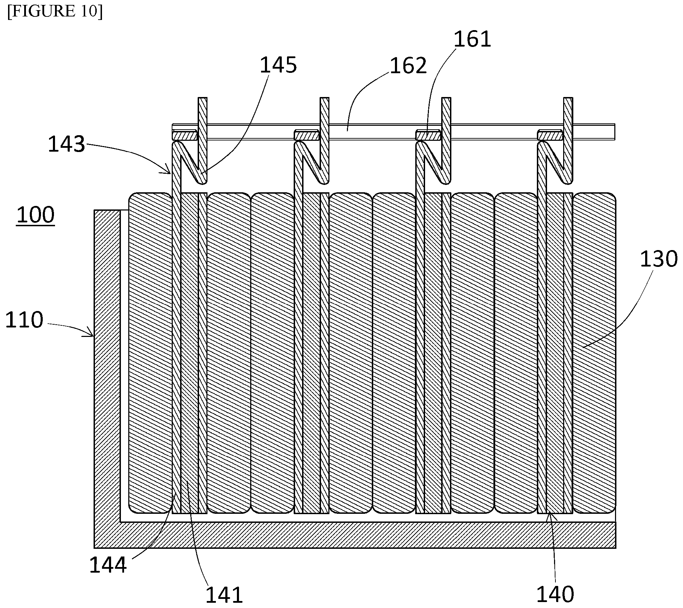

Next, referring to FIG. 9 and FIG. 10, the connecting guide 160 is placed above the plurality of thermal barriers 140 in a manner that the end portion of the thermal insulation sheet 143 is adjacent to the barrier connecting portion 161 and protrudes above the barrier connecting portion 161.

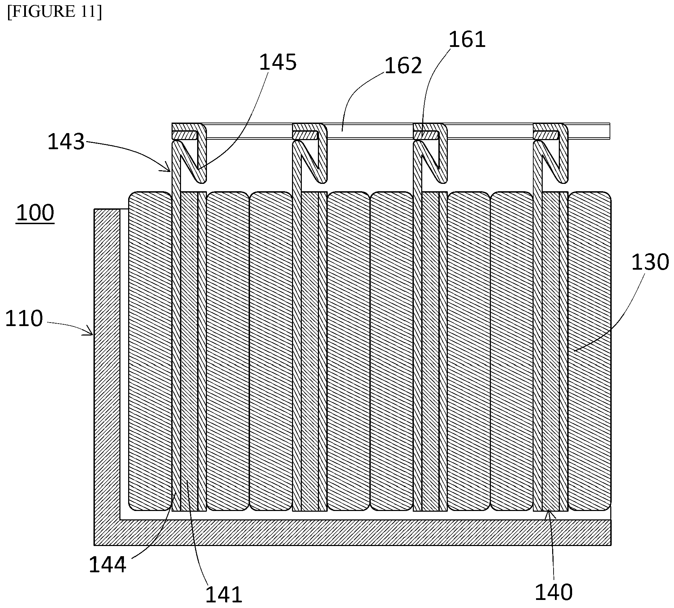

Next, as shown in FIG. 11, the end portion of the thermal insulation sheet 143 is folded laterally in a manner that the side surface of the end portion of the thermal insulation sheet 143 comes in contact with the upper surface of the barrier connecting portion 161. Here, the upper surface of the barrier connecting portion 161 and the side surface of the end portion of the thermal insulation sheet 143 may be mutually attached. The attachment method may be through the use of an adhesive layer or double-sided tape, or by using separate fixing elements such as screws, rivets, etc., and the fixing method is not limited thereto.

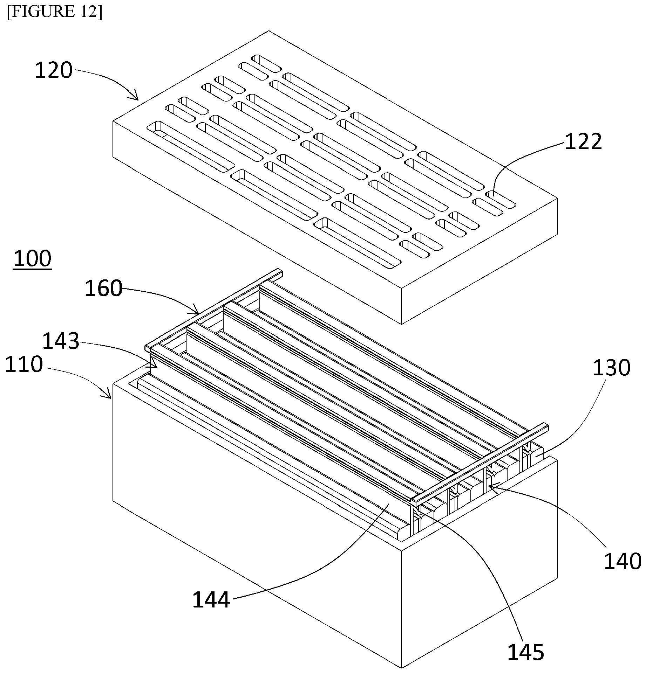

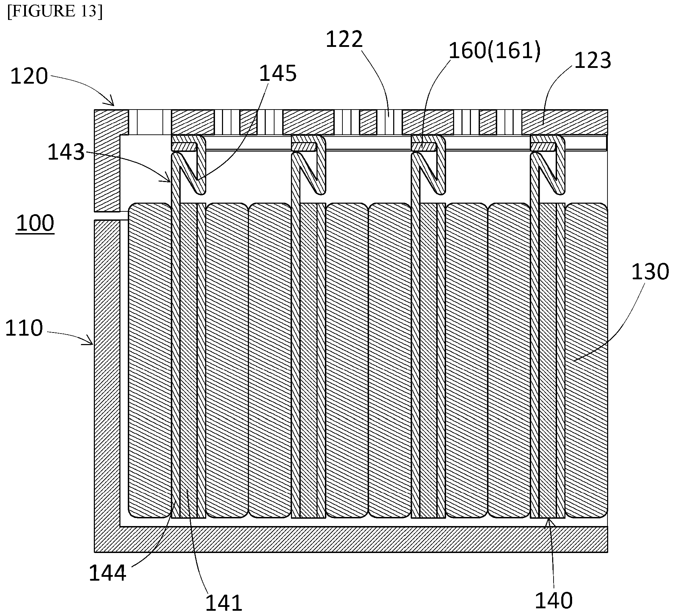

With the connecting guide 160 connected to the plurality of thermal insulation sheets 143, the module housing 110 is covered with the top plate 120 as shown in FIG. 12. The connecting guide 160 may be manufactured with a material that is strong against flame and has sufficient rigidity to maintain the shape thereof. Accordingly, with the module housing 110 covered with the top plate 120, the end portion of the thermal insulation sheet 143 fixed to the connecting guide 160 may exactly face the portion 123 of the top plate 120 without the venting holes as shown in FIG. 13. Here, the bottom surface of the top plate 120 and the end portion of the thermal insulation sheet 143 may be additionally attached.

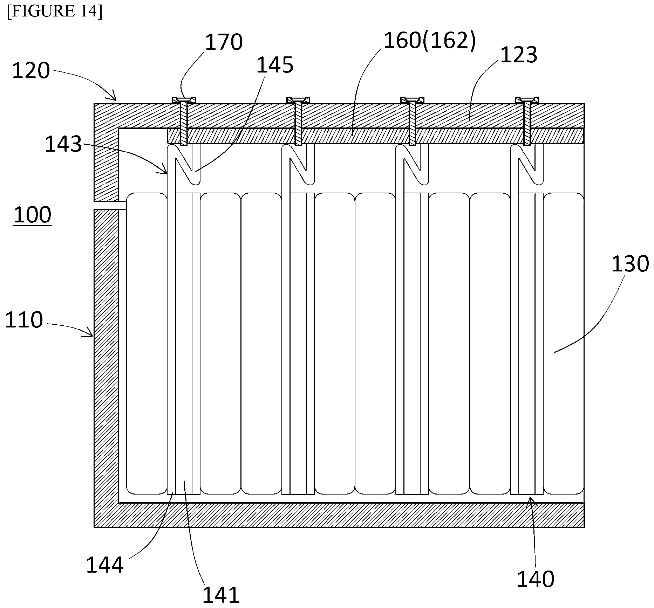

Additionally, as shown in FIG. 14, the plate connecting portion 162 of the connecting guide 160 may be fixed to the top plate 120. For example, by using a connector 170 such as a bolt through the top plate 120, the plate connecting portion 162 may be strongly fixed to the top plate 120. It is apparent that the type of the connector 170 is not limited to a bolt.

According to the connecting structure of the thermal barrier and the top plate, the handling, arrangement and fixing of the plurality of thermal barriers 140 may be facilitated through the connecting guide 160 while also more firmly connecting the top plate 120 to the thermal barrier 140.

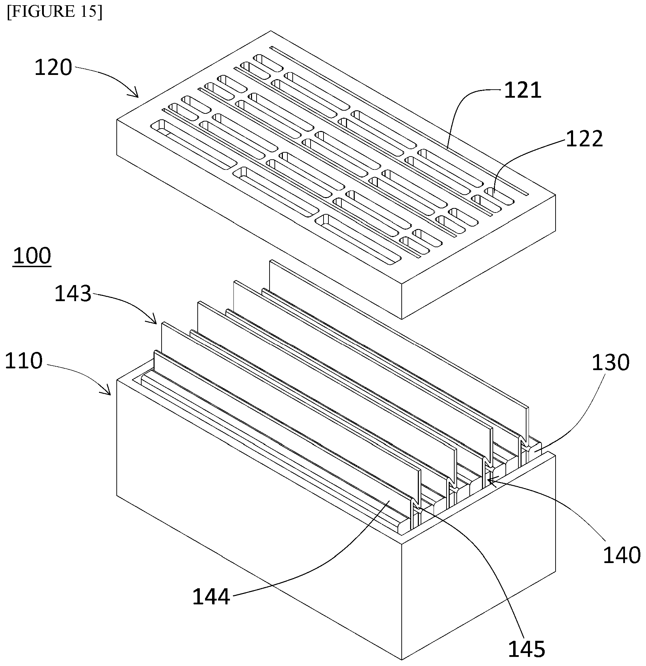

Hereinafter, with reference to FIGS. 15 to 18, a second embodiment of a connecting structure and a method of connecting a thermal barrier to a top plate of a battery module according to the present invention will be described. The connecting structure according to the second embodiment differs from the connecting structure illustrated in FIG. 2 in that the thermal barrier is connected to the upper surface of the top plate.

Referring to FIG. 15, with the laminate of the battery cells 130 and the thermal barrier 140 accommodated in the module housing 110, the end portion of the bent portion 145 of the thermal insulation sheet 143 of the thermal barrier 140 has an orientation extending upward.

In order to facilitate the process of connecting the thermal insulation sheet 143 to the top plate in such state, the top plate 120 provided with a slit 121 through which the thermal insulation sheet 143 may vertically pass through is employed. The top plate 120 is provided with a plurality of slits 121 in a portion without the venting hole 122. The slits 121 extend thinly and long such that the thermal barrier 140 may pass through.

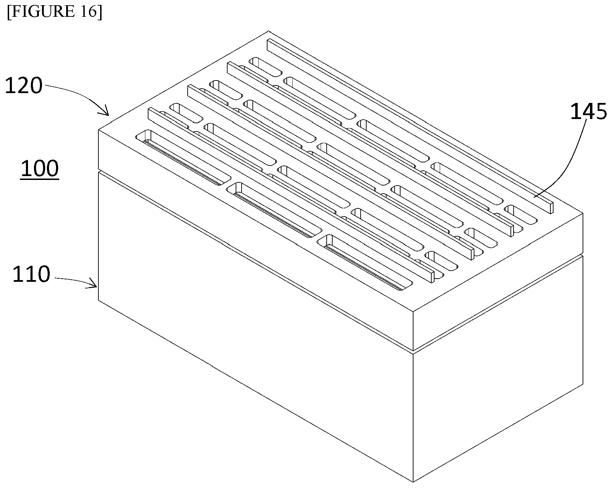

In the process of assembling the top plate 120 to the module housing 110, with the upper end portion of the thermal barrier 140 aligned with the slits 121. The top plate 120 is brought toward the module housing 110. Thereafter, as shown in FIG. 16, the upper end portion of the thermal barrier 140 penetrates the top plate 120 through the slits 121 and protrudes above from the top plate 120.

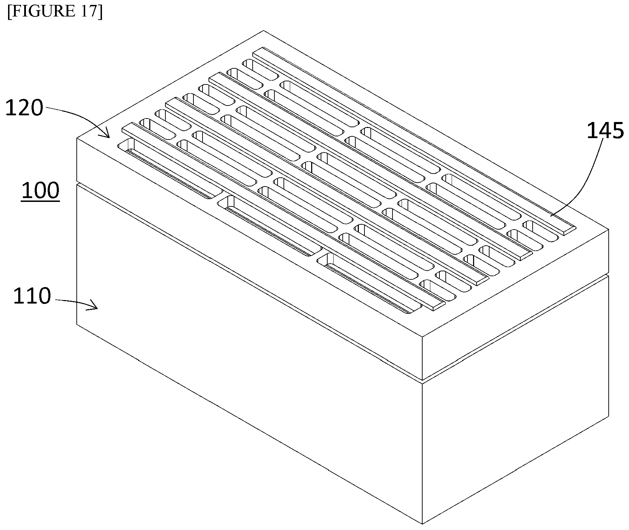

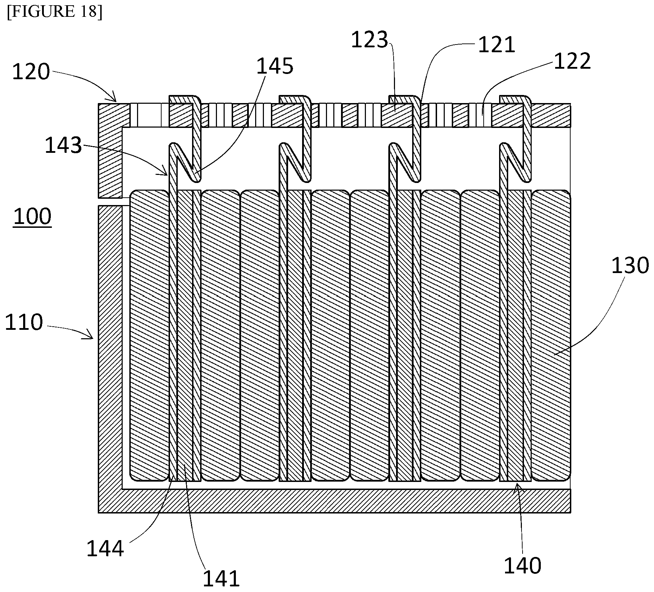

Next, as shown in FIGS. 17 and 18, the upper end portion of the bent portion 145 protruding through the top plate 120 is laterally folded in a manner that the side surface of the end portion of the thermal insulation sheet 143 comes into contact with the upper surface of the top plate 120. Here, the upper surface of the top plate 120 and the side surface of the end portion of the thermal insulation sheet 143 may be mutually fixed. The end portion of the thermal insulation sheet 143 may be attached to the upper surface of the top plate 120 by interposing an adhesive layer or double-sided tape, or by using a separate fixing element such as a screw or rivet. However, the fixing method is not limited thereto.

The end portion of the thermal insulation sheet 143 is attached to the portion 123 of the top plate 120 without the venting hole.

According to the connecting structure of the thermal barrier and the top plate, handling, arrangement, and fixation of a plurality of thermal barriers 140 may be facilitated by merely providing the slit 121 in the top plate 120 and forming a guide surface around the lower end portion of the slit 121 of the top plate 120 to guide the thermal barrier to be inserted thereinto.

Although the first embodiment and the second embodiment are described using the bent portion 145 as an example, it is apparent that other types of bent portions 146 and 147 may be applied.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a module housing provided with an accommodating space therein and an upper portion of the module housing provided with an opening;
a top plate provided to cover the upper portion of the module housing;
a plurality of battery cells stacked in the accommodating space of the module housing; and
one or more thermal barriers interposed between at least one battery cells, connected to the top plate, and deformed while remaining connected to the top plate when the top plate is opened to block flames from moving toward an adjacent battery cell.

2. The battery module of claim 1, wherein each of the one or more thermal barriers comprises:
a thermal insulation pad interposed between the plurality of battery cells and spaced apart from the top plate; and
a thermal insulation sheet stacked on the thermal insulation pad, extending above the thermal insulation pad so as to be connected to the top plate, and deformed while remaining to be connected to the top plate when the top plate is opened.

3. The battery module of claim 2, wherein the thermal insulation sheet is formed to be a bent shape in a section between the thermal insulation pad and the top plate.

4. The battery module of claim 2, wherein the thermal insulation sheet comprises:
a flat sheet attached to at least one of two surfaces of the thermal insulation pad; and
a bent portion formed to be a bent shape in a section between an upper portion of the thermal insulation pad and the top plate, and connected to the top plate.

5. The battery module of claim 4, wherein the bent portion has an N shape.

6. The battery module of claim 4, wherein the bent portion has a zigzag shape in vertical direction.

7. The battery module of claim 4, wherein the bent portion has a rounded N shape.

8. The battery module of claim 4, wherein the bent portion is disposed vertically above the thermal insulation pad.

9. The battery module of claim 4, wherein a width of the bent portion is within a predetermined range with respect to a thickness of the one or more thermal barriers.

10. The battery module of claim 1, wherein the top plate is provided with a plurality of venting holes, and
the bent portion is connected to a portion of the top plate without the venting holes.

11. The battery module of claim 1, wherein the top plate is provided with a plurality of venting holes, and
the venting holes are provided in the top plate between adjacent thermal barriers.

12. The battery module of claim 2, wherein the plurality of battery cells are stacked in a widthwise direction of the module housing, and
the thermal insulation sheet blocks in the widthwise direction of the module housing to prevent flames from traveling in the widthwise direction of the module housing.

13. The battery module of claim 1, wherein a connecting structure of the one or more thermal barriers and the top plate comprises an attachment.

14. The battery module of claim 1, wherein a connecting structure of the one or more thermal barriers and the top plate comprises a connector.

15. The battery module of claim 1, wherein a connecting structure of the one or more thermal barriers and the top plate comprises a connecting guide connected to two or more thermal barriers and connected to the top plate.

16. The battery module of claim 1, wherein the one or more thermal barriers are connected to a bottom surface of the top plate.

17. The battery module of claim 1, wherein the one or more thermal barriers is connected to an upper surface of the top plate.
